# EUROPEAN PATENT APPLICATION

(11) **EP 2 938 105 A1**
(43) Date of publication of application: **28.10.2015**
(21) Application number: 13864662.5
(22) Date of filing: 18.12.2013
(51) Int. Cl.: H04W 8/02, H04W 4/14

(54) **METHOD AND DEVICE FOR SMS PROCESSING THROUGH IMS NETWORK**

(30) Priority: 21.12.2012 KR 20120150951
(71) Applicant: Samsung Electronics Co., Ltd., Suwon-si, Gyeonggi-do 443-742 (KR)
(72) Inventor: LIM, Deoksoo, Yongin-si Gyeonggi-do 448-536 (KR)
(74) Representative: Birchenough, Lewis
(86) International application number: PCT/KR2013/011785
(87) International publication number: WO 2014/098461

(57) **Abstract**

The present invention relates to a method and device for short message service (SMS) processing through an IP multimedia subsystem (IMS) network. An SMS processing method in an internet protocol-short message-gateway (IP-SM-GW) of the IMS network according to an embodiment of the present invention includes obtaining user information from a serving call session control function (S-CSCF) and a home subscriber server (HSS) and notifying the S-CSCF of an SMS destination by using a globally routable user agent URI (GURR) or a +sip.instance parameter based on the user information. According to the present invention, when there is a shared implicitly registered ID set (IRS) subscriber in the IMS, i.e., even if there are terminals sharing the same public ID and having different private IDs, it is possible to accurately transmit an SMS message to an intended terminal. Also, according to the present invention, it is possible to restore missing data even if the IP-SM-GW has a defect.

## Description

### [Technical Field]

The present invention relates to a method and device for processing an SMS (Short Message Service) through an IMS (IP Multimedia Subsystem) network and, more particularly, to a method and device for processing the SMS at an IP-SM-GW (Internet Protocol-Short Message-GateWay) which is one of ASs (Application Servers) for processing SMS over IP in the IMS network.

### [Background Art]

The IP-SM-GW performs processing of a transmitting or receiving procedure of SMS, using MSISDN (Mobile Station International ISDN Number) information received through the register of a third party from an S-CSCF (Serving Call Session Control Function), SMS over IP capability information received through notification about the register to the S-CSCF, and the like.

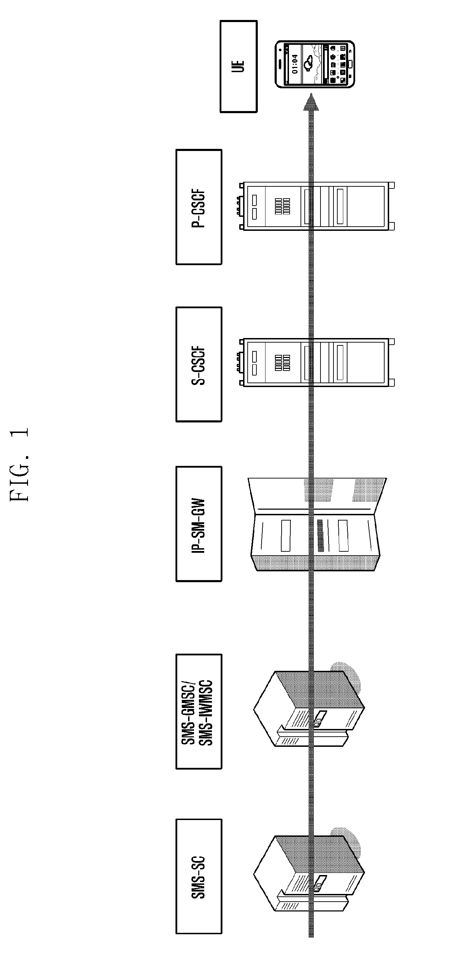

FIG. 1 is a diagram illustrating a procedure of delivering an SMS (Short Message Service) to UE (User Equipment) in accordance with a prior art.

Referring to FIG. 1, the receipt of SMS is processed according to the following procedure. Namely, a short message is delivered to the IP-SM-GW through an SMS-GMSC/SMS-IWMSC (SMS-Gateway Mobile Switching Center/SMS-InterWorking Mobile Switching Center) from an SMS-SC (SMS Service Center) and then delivered to UE (User Equipment) via the S-CSCF and a P-CSCF (Proxy-CSCF).

The S-CSCF manages a session status of UE, stores subscriber information of UE delivered from HSS, and may perform subscriber authentication in connection with the HSS. In case of a single IRS (Implicit Register Set) subscriber, the S-CSCF causes no problem of SMS delivery even in a prior art. However, in case of a shared IRS subscriber, a certain problem may be caused when determining UE to which SMS should be delivered.

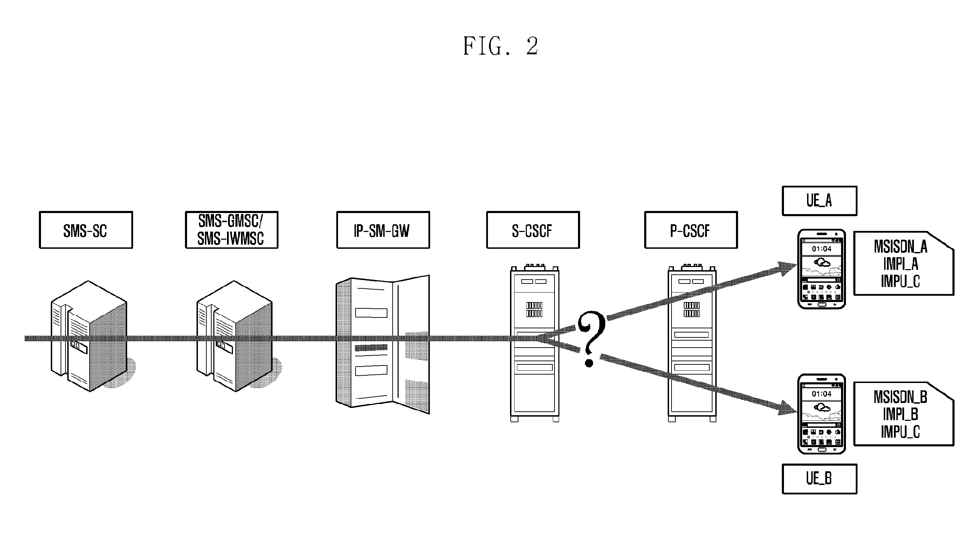

FIG. 2 is a diagram illustrating a procedure of delivering an SMS to a shared IRS subscriber in accordance with a prior art.

Referring to FIG. 2, in case of a shared IRS subscriber in the IMS, namely in case of IMPI_A and IMPI_B which share the same public ID, IMPU_C, and have different private IDs, there is a problem that an SMS which should be sent to UE_A (MSISDN_A) may be delivered to UE_B by the S-CSCF. The reason is that the IP-SM-GW instructs the S-CSCF to deliver the SMS to the IMPU_C and hence the S-CSCF performs forking. Therefore, in case there are two UEs having the same public ID, i.e., IMPU_C, the S-CSCF has a problem of deciding which UE is a target to which the SMS should be delivered.

Moreover, according to a prior art, there is no countermeasure against data loss when any problem occurs in the IP-SM-GW.

### [Disclosure of Invention]

### [Technical Problem]

The present invention is proposed to solve the above-discussed issues and to provide a method and device capable of delivering an SMS to intended UE in case of a shared IRS (Implicitly Registered id Set) subscriber in the IMS, namely in case there are UEs which share the same public ID and have different private IDs. Also, the present invention is to provide a method and device allowing restoration in response to data loss due to a problem of the IP-SM-GW.

### [Solution to Problem]

According to an embodiment of the present invention, a method for processing SMS at an IP-SM-GW (Internet Protocol-Short Message-GateWay) in an IMS network includes step of obtaining user information from an S-CSCF (Serving Call Session Control Function) and an HSS (Home Subscriber Server), and step of notifying an SMS reception destination to the S-CSCF by using GRUU (Globally Routable User Agent URI) or +sip.instance parameter based on the user information.

According to another embodiment of the present invention, an IP-SM-GW (Internet Protocol-Short Message-GateWay) device for processing SMS in an IMS network includes a control unit configured to obtain user information from an S-CSCF (Serving Call Session Control Function) and an HSS (Home Subscriber Server), and to notify an SMS reception destination to the S-CSCF by using GRUU (Globally Routable User Agent URI) or +sip.instance parameter based on the user information.

### [Advantageous Effects]

According to the present invention, it is possible to exactly deliver an SMS to intended UE even in case of a shared IRS (Implicitly Registered id Set) subscriber in the IMS, namely in case there are UEs which share the same public ID and have different private IDs. Additionally, according to the present invention, it is possible to restore lost data even in case any problem occurs in the IP-SM-GW.

### [Brief Description of Drawings]

FIG. 1 is a diagram illustrating a procedure of delivering an SMS (Short Message Service) to UE (User Equipment) in accordance with a prior art.
FIG. 2 is a diagram illustrating a procedure of delivering an SMS to a shared IRS subscriber in accordance with a prior art.
FIG. 3 is a diagram illustrating the structure of a normal communication system that provides SMS over IP.
FIG. 4 is a diagram illustrating a third party register procedure of an IP-SM-GW 405 in accordance with an embodiment of the present invention.
FIG. 5 is a diagram illustrating an SMS reception procedure in accordance with an embodiment of the present invention.
FIG. 6 is a diagram illustrating a data restoration process in accordance with an embodiment of the present invention.
FIG. 7 is a flow diagram illustrating an SMS processing method of an IP-SM-GW in accordance with an embodiment of the present invention.
FIG. 8 is a flow diagram illustrating an SMS processing method of an IP-SM-GW in accordance with another embodiment of the present invention.
FIG. 9 is a diagram illustrating an internal configuration which may be applied to an IP-SM-GW device or an S-CSCF device in accordance with an embodiment of the present invention.

### [Mode for the Invention]

Hereinafter, preferred embodiments of the present invention will be described with reference to the accompanying drawings. In the drawings, the same reference numerals denote the same elements. Additionally, well known functions or structures may not be described or illustrated in detail to avoid obscuring the subject matter of the present invention.

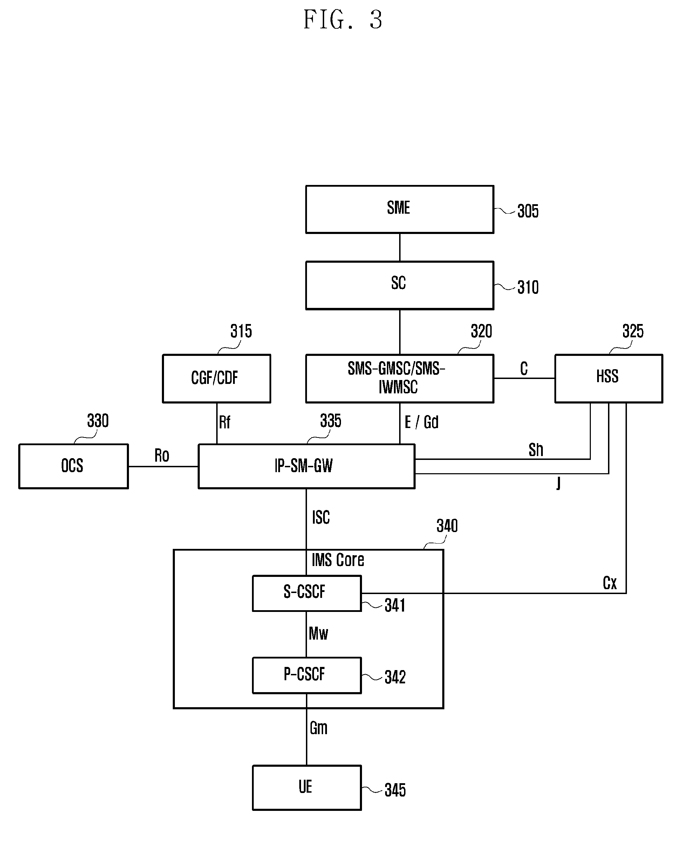

FIG. 3 is a diagram illustrating the structure of a normal communication system that provides SMS over IP.

FIG. 3 shows a structure prescribed in TS 23.204 of 3GPP. The structure 300 of the communication system in FIG. 3 may provide SMS signaling through SIP/IP (Session Interface Protocol/Internet Protocol). Here, UE 345 denotes a mobile station or any other communication device capable of an SMS. The UE 345 can access an IMS core 340 through a Gm interface. Additionally, the IMS core 340 is connected with an IP-SM-GW 335 through an ISC interface. The IP-SM-GW 335 may form an interworking unit (IWU) that offers an interworking function between an IP network core, i.e., the IMS core 340, and a GSM/GPRS network. In this case, the IMS core 340 may include an S-CSCF and a P-CSCF.

Here, the IP-SM-GW 335 is connected with an SMS-GMSC/SMS-IWMSC 320 through an E/Gd interface. Further, the SMS-GMSC/SMS-IWMSC 320 is connected with an SC (Service Center) 330 in a typical manner and then may be connected with an SME 305 that forms a communication endpoint to which an SMS message can be delivered.

Additionally, the communication system structure 300 may include an OCS 330 connected with the IP-SM-GW 335 through an Ro interface, a CGF/CDF 315 connected with the IP-SM-GW 335 through an Rf gateway, and an HSS 325 connected with the SMS-GMSC/SMS-IWMSC 320, the IP-SM-GW 335 and the IMS core 340 through respective interfaces Cx, Sh and C'.

The IP-SM-GW 335 may perform various functions, including a function associated with protocol interworking, for an IP-based SMS delivery between the UE 345 and the SC 310. Such functions may include access to the SMS-GMSC/SMS-IWMSC 320 using MAP (Mobile Application Part) protocol established through SS7 (Signaling System 7). The IP-SM-GW 335 appears as MSC or SGSN (Serving Gateway Service Node) in the SMS-GMSC/SMS-IWMSC 320, using the E or Gd interface. Additional functionality offered by the IP-SM-GW 335 provides access to the SMS-GMSC/SMS-IWMSC 320 using the MAP protocol established through SS7 and thereby can enable the IP-SM-GW 335 to appear as MSC or SGSN in the SMS-GMSC/SMS-IWMSC 320, using the E or Gd interface. Also, the IP-SM-GW 335 may perform a function to communicate with the UE 345 using IMS messaging as transport while maintaining the format and functionality of an SMS message.

Further, the IP-SM-GW 335 may perform a function to obtain associated information (knowledge) between an MSISDN (Mobile Station International Subscriber Directory Number) and an IP (Internet Protocol) address of UE. Also, the IP-SM-GW 335 performs a function to act as an application server with regard to the IMS.

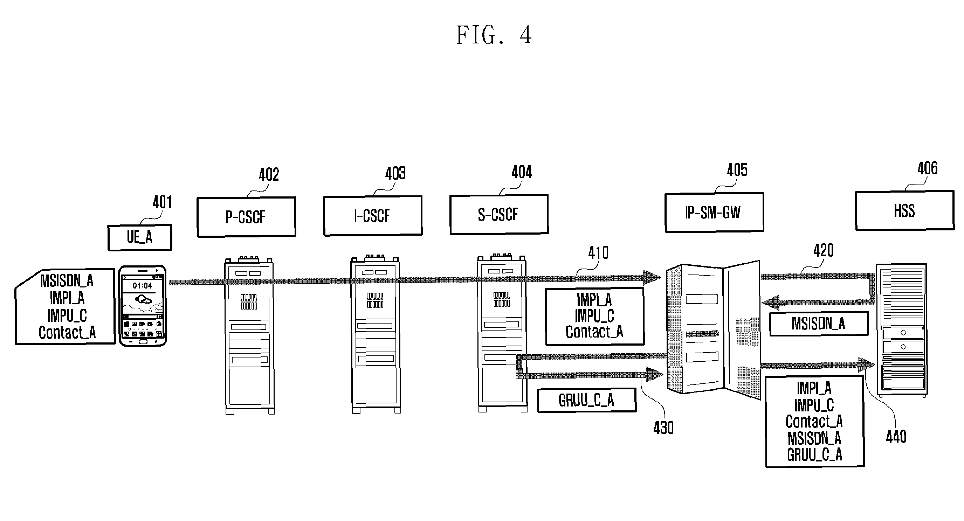

FIG. 4 is a diagram illustrating a third party register procedure of an IP-SM-GW 405 in accordance with an embodiment of the present invention.

Referring to FIG. 4, the system shown in FIG. 4 includes a UE_A 401, a P-CSCF 402, an I-CSCF 403, an S-CSCF 404, an IP-SM-GW 405, and an HSS (Home Subscriber Server) 406.

Here, the UE_A 401 manages Private User Identity, MSISDN_A, IMPI_A and IMPU_C, and Contact_A. At this time, Contact_A includes Contact header, and this Contact header may contain +sip.instance parameter of the UE_A 401.

First of all, at step 410, the IP-SM-GW 405 collects Private User Identity, Contact header, etc. of UE from the S-CSCF 404 through the register of a third party. At this time, Private User Identity and Contact header received from the S-CSCF 404 are what are delivered to the S-CSCF 404 through the P-CSCF 402 and the I-CSCF 403 from the UE_A 401.

Then, at step 420, the IP-SM-GW 405 collects C-MSISDN regarding Private User Identity from the HSS 406 through the Sh interface. Namely, the IP-SM-GW 405 receives identities of UE from the UE 401 and the HSS 406 and stores them.

Further, at step 430, the IP-SM-GW 405 collects GRUU of each Public User Identity from the S-CSCF 404 through notification (or subscription) according to the register. The GRUU (Globally Routable User agent URI) denotes a unique user agent identifier which is routable globally. For call routing to a specific UA (User Agent) instance, some applications of SIP (Session Initiation Protocol) require constructing and distributing URI which can be used by somebody on the Internet. Here, URI routed to a specific UA instance is referred to as GRUU. This GRUU is classified into public GRUU and temporary GRUU. The public GRUU is always unchanged regardless of registration refreshed, and is created when a value of "gr" URI parameter of AOR (Address Of Record) is inputted as an instance ID. At this time, a "gr" value of the public GRUU may be set using a +sip.instance parameter value of UE or formed on the basis of +sip.instance parameter. The temporary GRUU should be created newly when the registration is refreshed, and also should be managed accumulatively during a registration period.

Steps 410 to 430 correspond to a register procedure for SMS transmission. The IP-SM-GW 405 may receive information associated with the UE 401 from the S-CSCF 404 and the HSS 406 through a register procedure. As a result, the IP-SM-GW 405 can obtain GRUU or +sip.instance parameter of UE through a register procedure.

At step 440, the IP-SM-GW 405 transmits Private User Identity, Contact header, C-MSISDN, and GRUU of each Public User Identity to the HSS 406 through the Sh interface. The HSS 406 receives them and stores them as Repository data. This is for restoration in case of data loss due to a problem of the IP-SM-GW.

Although a register procedure for UE_A only is described exemplarily in FIG. 4, such a register procedure may be performed for all UEs in the network.

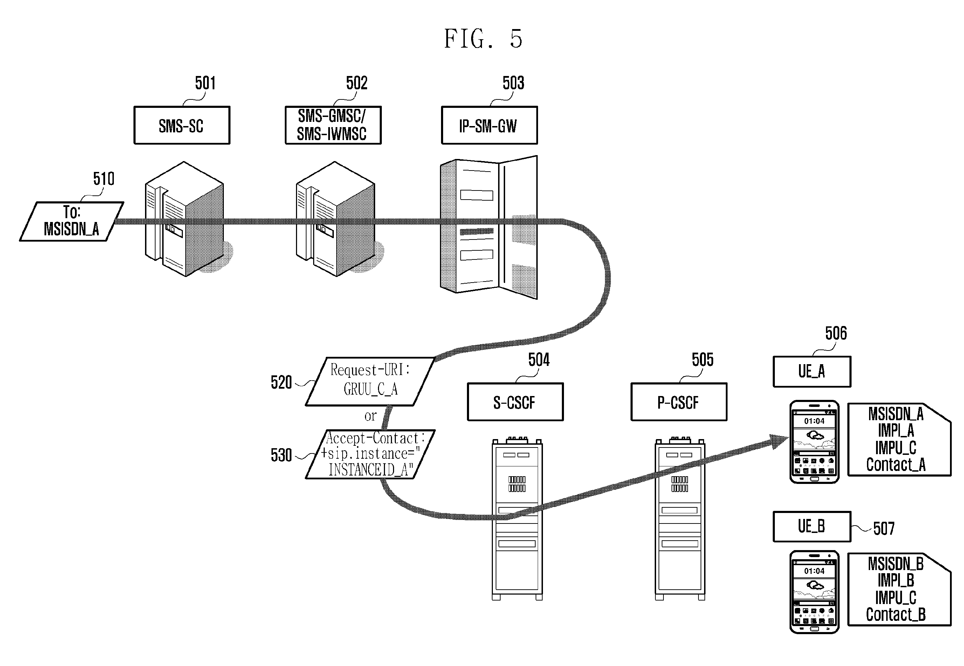

FIG. 5 is a diagram illustrating an SMS reception procedure in accordance with an embodiment of the present invention.

Referring to FIG. 5, the system shown in FIG. 5 includes an SMS-SC 501, an SMS-GMSC/SMS-IWMSC 502, an IP-SM-GW 503, an S-CSCF 504, a P-CSCF 505, a UE_A 506, and a UE_B 507.

Here, the UE_A 506 has Private User Identity, MSISDN_A, IMPI_A and IMPU_C, and Contact header of Contact_A. Also, the UE_B 507 has Private User Identity, MSISDN_B, IMPI_B and IMPU_C, and Contact header of Contact_B. Since the UE_A 506 and the UE_B 507 have the same Public ID, IMPU_C, the S-CSCF may have a problem of deciding which UE is a target to which the SMS should be delivered.

In an embodiment for solving the above problem, GRUU obtained at step 430 of FIG. 4 may be used. Namely, in the SMS reception procedure, GRUU of recipient MSISDN is used in Request-URI of a transmitted message. GRUU may be collected differently depending on Public User Identity. Since GRUU denotes a unique user agent identifier which is routable globally and is URI for routing to a specific UA instance, GRUU can tell exact target UE in the SMS reception procedure.

In another embodiment for solving the above problem, +sip.instance parameter may be used in case of no GRUU. Namely, in case Contact information of recipient MSISDN contains +sip.instance parameter, SMS is delivered by setting this as a +sip-instance value in Accept-Contact header. Therefore, it is possible to tell exact target UE in the SMS reception procedure.

Referring to FIG. 5, at 510, the SMS-SC 501 transmits a message to the UE_A 506 having MSISDN_A. At 520, GRUU_C_A which is GRUU of the UE_A 506 having MSISDN_A is used for Request-URI (Request-URI: GRUU_C_A) as in the first embodiment such that the message can be received to the UE_A 506.

Meanwhile, at 530, Contact information of MSISDN contains +sip.instance parameter and this is set as a +sip-instance value in Accept-Contact header (+sip.instance="INSTANCEID_A") such that the message can be received to the UE_A 506.

In case the UE_A 506 and the UE_B 507 have the same Public ID as discussed above, GRUU which is a unique identifier of the UE_A 506 is further used or +sip.instance parameter is set as a +sip-instance value in Accept-Contact header for SMS delivery. Therefore, the S-CSCF can clearly determine which UE is a target to which the SMS should be delivered.

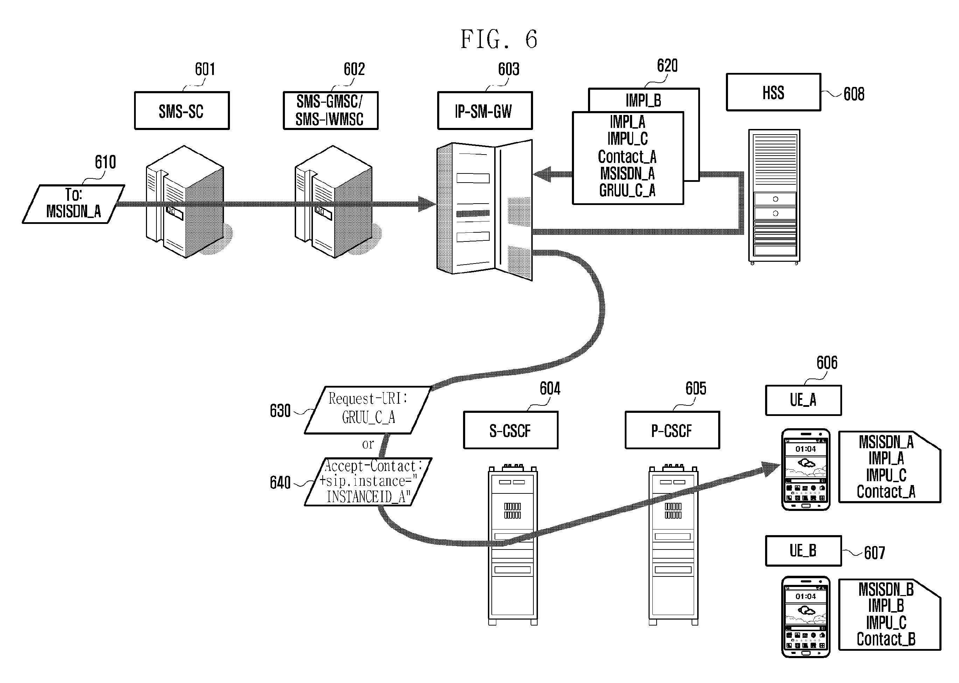

FIG. 6 is a diagram illustrating a data restoration process in accordance with an embodiment of the present invention.

Referring to FIG. 6, the system shown in FIG. 6 includes an SMS-SC 601, an SMS-GMSC/SMS-IWMSC 602, an IP-SM-GW 603, an S-CSCF 604, a P-CSCF 605, a UE_A 606, and a UE_B 607.

Here, the UE_A 606 has Private User Identity, MSISDN_A, IMPI_A and IMPU_C, and Contact header of Contact_A. Also, the UE_B 607 has Private User Identity, MSISDN_B, IMPI_B and IMPU_C, and Contact header of Contact_B.

Since the UE_A 606 and the UE_B 607 have the same Public ID in this embodiment shown in FIG. 6, a unique identifier GRUU of the UE_A 606 is further used or +sip.instance parameter is set as a +sip-instance value in Accept-Contact header for SMS delivery. Therefore, the S-CSCF can clearly determine which UE is a target to which the SMS should be delivered.

Meanwhile, FIG. 6 shows case of data loss due to any problem of the IP_SM-GW 603. Therefore, all operations except a feature of 620 are identical to those in FIG. 5.

In case of data loss due to any unexpected problem, the IP-SM-GW 603 can restore data by bringing Repository data stored in the HSS 608 at step 440 in FIG. 4. Namely, if there is no information about UE to which SMS will be delivered, the IP-SM-GW 603 may request such information from the HSS 608 and obtain it. For this, the IP-SM-GW 603 may transmit Private User Identity, Contact header, C-MSISDN, and GRUU of each Public User Identity to the HSS 608 through the Sh interface in a third party register procedure. Therefore, data stored in the HSS 608 may be used for restoration.

As discussed above, even in case any problem occurs, the IP-SM-GW 603 can restore lost data.

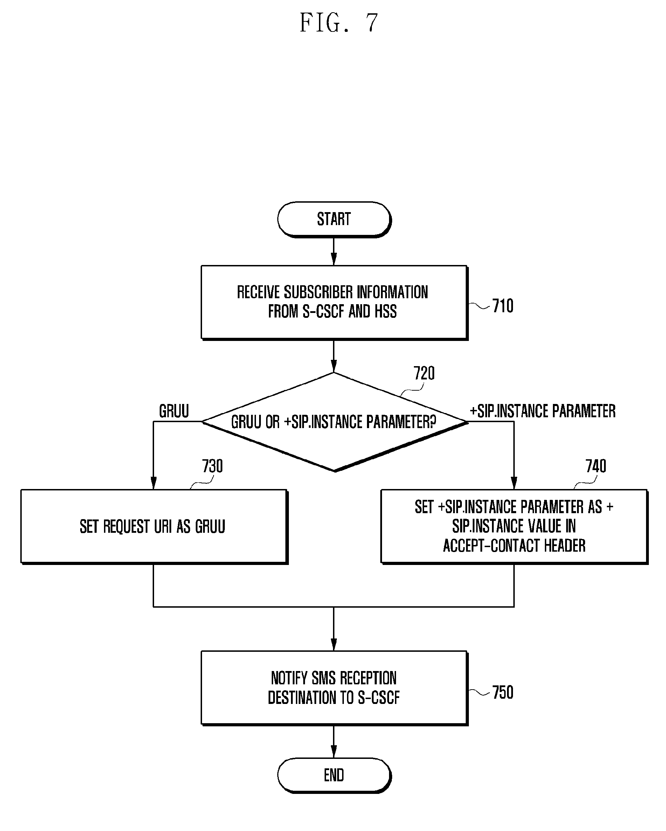

FIG. 7 is a flow diagram illustrating an SMS processing method of an IP-SM-GW in accordance with an embodiment of the present invention.

First of all, at step 710, a control unit may control user information to be obtained from an S-CSCF (Serving Call Session Control Function) and an HSS (Home Subscriber Server). At this time, collected from the S-CSCF through a third party register are Private User Identity, Contact header, etc. of UE. Additionally, collected from the HSS through the Sh interface is C-MSISDN regarding Private User Identity. Further, the IP-SM-GW collects GRUU of each Public User Identity from the S-CSCF through notification according to the register.

Then, at step 720, the control unit determines whether to use GRUU or use +sip.instance parameter. If it is determined at step 720 to use GRUU, the control unit may set Request-URI of SMS as GRUU at step 730. Otherwise, if it is determined at step 720 to use +sip.instance parameter, the control unit may set +sip.instance parameter as a +sip-instance value in Accept-Contact header.

Further, at step 750, the control unit notifies the SMS reception destination to the S-CSCF.

As discussed above, by using a unique identifier GRUU or setting +sip.instance parameter as a +sip-instance value in Accept-Contact header and then delivering SMS, the S-CSCF can clearly determine which UE is the destination of SMS delivery.

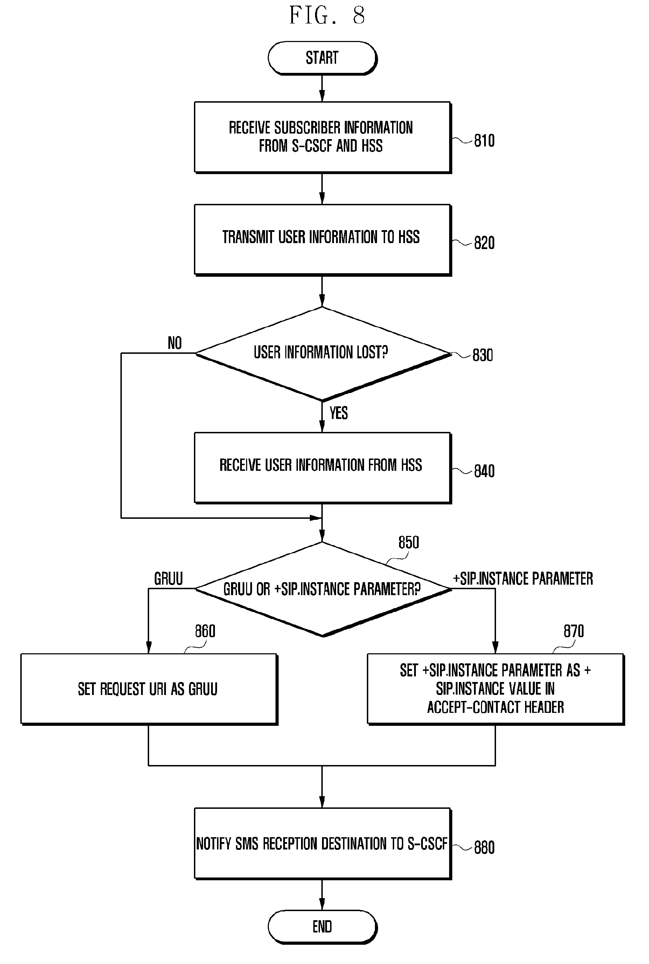

FIG. 8 is a flow diagram illustrating an SMS processing method of an IP-SM-GW in accordance with another embodiment of the present invention.

At step 810, like step 710, the control unit may control user information to be obtained from the S-CSCF (Serving Call Session Control Function) and the HSS (Home Subscriber Server).

Then, at step 820, the control unit controls the user information to be transmitted to the HSS. Further, at step 830, the control unit determines whether the user information is lost or not. In case of no data loss, step 850 is performed. If the user information is lost, the control unit controls the user information to be received from the HSS at step 840.

Through the above process, lost data can be restored even in case any problem occurs in the IP-SM-GW 603.

Thereafter, steps 850 to 880 are identical to steps 720 to 750 in FIG. 7

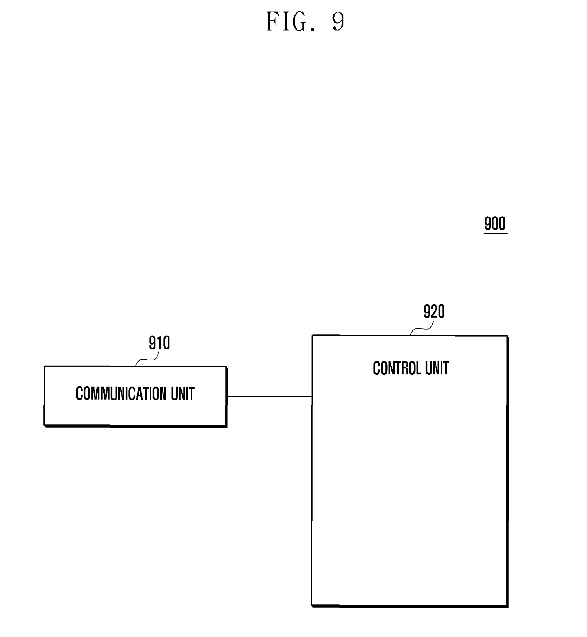

FIG. 9 is a diagram illustrating an internal configuration which may be applied to an IP-SM-GW device or an S-CSCF device in accordance with an embodiment of the present invention.

Referring to FIG. 9, a device 900 includes a communication unit 910 and a control unit 920. The communication unit 910 performs a function to transmit or receive data to or from other device. The control unit 920 controls an overall function of the device 900 including all embodiments of the present invention.

It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which are executed via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term "unit", as used herein, may refer to a software or hardware component or device, such as a Field Programmable Gate Array (FPGA) or Application Specific Integrated Circuit (ASIC), which performs certain tasks. A unit may be configured to reside on an addressable storage medium and configured to execute on one or more processors. Thus, a module or unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules/units may be combined into fewer components and modules/units or further separated into additional components and modules.

While this invention has been particularly shown and described with reference to an exemplary embodiment thereof, it will be understood by those skilled in the art that various changes in form and details may be made therein without departing from the spirit and scope of this invention as defined by the appended claims.

## Claims

1. A method for processing SMS at an IP-SM-GW (Internet Protocol-Short Message-GateWay) in an IMS network, the method comprising steps of:
obtaining user information from at least one of an S-CSCF (Serving Call Session Control Function) and an HSS (Home Subscriber Server); and
when the SMS is received, transmitting GRUU (Globally Routable User Agent URI) or +sip.instance parameter to the S-CSCF, based on the user information,
wherein the GRUU or the +sip.instance parameter is used when the S-CSCF determines a reception destination of the SMS.

2. The method of claim 1, wherein the step of transmitting the GRUU or the +sip.instance parameter to the S-CSCF includes:
setting Request-URI of the SMS as the GRUU; and
transmitting the Request-URI of the SMS to the S-CSCF.

3. The method of claim 1, wherein the step of transmitting the GRUU or the +sip.instance parameter to the S-CSCF includes:
setting header of Accept-Contact as a value of the +sip.instance parameter; and
transmitting the Accept-Contact to the S-CSCF.

4. The method of claim 1, wherein the step of obtaining the user information includes:
obtaining user identity information from the S-CSCF through a register procedure;
receiving MSISDN (Mobile Station International ISDN Number) regarding the user from the HSS by using the user identity information; and
obtaining GRUU regarding the user from the S-CSCF by using the user identity information.

5. The method of claim 1, further comprising step of:
transmitting the user information obtained from the S-CSCF and the HSS to the HSS.

6. The method of claim 5, further comprising step of:
if there is no user information when the SMS is received, receiving the user information from the HSS.

7. An IP-SM-GW (Internet Protocol-Short Message-GateWay) device for processing SMS in an IMS network, the device comprising:
a communication unit configured to perform a data communication with outside; and
a control unit configured to control the communication unit to obtain user information from at least one of an S-CSCF (Serving Call Session Control Function) and an HSS (Home Subscriber Server), and to control the communication unit to transmit GRUU (Globally Routable User Agent URI) or +sip.instance parameter to the S-CSCF, based on the user information.

8. The device of claim 7, wherein the control unit is further configured to set Request-URI of the SMS as the GRUU, and to control the communication unit to transmit the Request-URI of the SMS to the S-CSCF.

9. The device of claim 7, wherein the control unit is further configured to set header of Accept-Contact as a value of the +sip.instance parameter, and to control the communication unit to transmit the Accept-Contact to the S-CSCF.

10. The device of claim 7, wherein the control unit is further configured to obtain user identity information from the S-CSCF through a register procedure when obtaining the user information, to receive MSISDN (Mobile Station International ISDN Number) regarding the user from the HSS by using the user identity information, and to obtain GRUU regarding the user from the S-CSCF by using the user identity information.

11. The device of claim 7, wherein the control unit is further configured to control the communication unit to transmit the user information obtained from the S-CSCF and the HSS to the HSS.

12. The device of claim 11, wherein the control unit is further configured to control the communication unit to receive the user information from the HSS if there is no user information when the SMS is received.

13. A method for processing SMS at an S-CSCF (Serving Call Session Control Function) in an IMS network, the method comprising steps of:
when the SMS is received, receiving GRUU (Globally Routable User Agent URI) or +sip.instance parameter based on the user information from an IP-SM-GW (Internet Protocol-Short Message-GateWay); and
transmitting the SMS to user equipment corresponding to the GRUU or the +sip.instance parameter.

14. The method of claim 13, wherein the GRUU is received through Request-URI of SMS.

15. The method of claim 13, wherein the +sip.instance parameter is received through header of Accept-Contact.

16. The method of claim 13, further comprising:
when the user equipment is registered, transmitting the GRUU (Globally Routable User Agent URI) or +sip.instance parameter of the user equipment to the IP-SM-GW.

17. An S-CSCF (Serving Call Session Control Function) device for processing SMS in an IMS network, the device comprising:
a communication unit configured to perform a data communication with outside; and
a control unit configured, when the SMS is received, to control the communication unit to receive GRUU (Globally Routable User Agent URI) or +sip.instance parameter based on the user information from an IP-SM-GW (Internet Protocol-Short Message-GateWay), and to control the communication unit to transmit the SMS to user equipment corresponding to the GRUU or the +sip.instance parameter.

18. The device of claim 17, wherein the GRUU is received through Request-URI of SMS.

19. The device of claim 17, wherein the +sip.instance parameter is received through header of Accept-Contact.

20. The device of claim 17, wherein the control unit is further configured, when the user equipment is registered, to control the communication unit to transmit the GRUU (Globally Routable User Agent URI) or +sip.instance parameter of the user equipment to the IP-SM-GW.
